# EUROPEAN PATENT SPECIFICATION

(11) **EP 4 308 509 B1**
(45) Date of publication and mention of the grant of the patent: **18.02.2026**
(21) Application number: 22712001.1
(22) Date of filing: 14.03.2022
(51) Int. Cl.: C03B 5/12, C03B 5/235, F23C 5/32

(54) **GAS-BURNING FURNACE**
GASBEFEUERTER OFEN
FOUR DE CALCINATION À GAZ

(30) Priority: 17.03.2021 EP 21163056
(43) Date of publication of application: 24.01.2024
(73) Proprietor: ROCKWOOL A/S, 2640 Hedehusene (DK)
(72) Inventor: HANSEN, Lars Elmekilde, 2640 Hedehusene (DK)
(74) Representative: Gill Jennings & Every LLP
(86) International application number: PCT/EP2022/056474
(87) International publication number: WO 2022/194747

(56) References cited:
- EP-A1- 1 944 273
- WO-A1-2014/057130
- WO-A1-2016/092100
- US-A- 3 563 722

## Description

### FIELD OF INVENTION

The invention is in the field of furnaces for melting mineral material, in particular for melting mineral material in a process for making fibres.

### BACKGROUND

Cyclone furnaces are established in the field of mineral melting processes.

Existing cyclone furnaces run solely or primarily on coal, or other solid or liquid fuel. Coal has particular benefits as the primary fuel in the process of operating a cyclone furnace because it makes a slow-burning flame. WO2014057130A1 allows for optional injection of a secondary gaseous fuel, making up less than 40% of the total fuel energy, in the lower end of a central region of the cyclone furnace to provide a flame there. The primary fuel used for melting mineral raw material is particulate.

US3077094 discloses a cyclone furnace in which air, gaseous fuel and optionally raw material are mixed together before entering the furnace. The gaseous fuel combusts quickly in this setup.

WO2016/092100A1 utilises a solid or liquid primary fuel for melting mineral raw material. A gaseous fuel can be used as a secondary fuel, co-injected with a particulate fuel at a lower section of the cyclone furnace than the primary fuel. This generates a stable flame in the lower section of the cyclone furnace, near to the melt pool, with the gaseous fuel combusting quickly and pre-heating the secondary particulate fuel. This set-up enables efficient use of cheaper fuels such as coal, whilst obtaining a high-quality melt. In WO2016/092100A1, particulate (i.e. solid or liquid) fuel is essential as the primary fuel, and gaseous fuel is only injected in a lower section of the cyclone furnace in combination with a particulate fuel.

EP 1 944 273 A1 discloses a cyclone furnace for melting mineral material, in which the primary fuel is particulate, especially coal. Only particulate fuel is injected at the top of the chamber and thus for the melting stage. Gaseous fuel is introduced in combination with particulate fuel in the lower section of the furnace, for the purpose of forming a flame above the melt pool. This flame is said to be advantageous for controlling the temperature of the melt pool and by extension the viscosity of the mineral melt leaving the furnace. However, particulate fuel is essential as the primary fuel in this document.

Although coal and other particulate fuels have been popular for use in cyclone furnaces for economic reasons, it would be desirable to use gaseous fuel as the sole or primary fuel to improve the environmental profile of the melting process. During development of the invention, a direct swap of particulate fuel for gaseous fuel using the same furnace setup was unsuccessful. Gaseous fuel burns much faster than particulate fuel and with a shorter flame than coal. A direct swap of particulate fuel for gaseous fuel resulted in blockage of fuel inlet ports due to slag formation, making the process unviable. The very fast burn rate of gaseous fuel results in near instantaneous sintering of mineral raw material, causing the undesirable inlet blockages.

It is an aim of the invention to provide the apparatus and method for using gaseous fuel in a cyclone furnace for producing mineral melt, thereby improving the environmental profile of the process whilst maintaining melt quality and apparatus longevity.

### SUMMARY

The invention provides a method for melting mineral material, the method comprising: providing a cyclone furnace, particulate mineral raw material, gaseous fuel, and oxidising agent; injecting gaseous fuel into the furnace at one or more first injection ports; injecting oxidising agent into the furnace at one or more second injection ports; injecting mineral raw material into the furnace at one or more third injection ports; wherein the gaseous fuel, oxidising agent and mineral raw material are all injected into the top of the furnace; allowing the gaseous fuel to combust with the oxidising agent, thereby melting the mineral raw material; characterised in that each first injection port is spaced at an angular separation from the one or more second injection ports such that no first injection port is at an angular separation of less than 20 degrees from any of the second injection ports, measured about a vertical axis through the centre of the cyclone furnace.

The invention also provides a cyclone furnace for melting mineral material using gaseous fuel as the sole or primary fuel, the furnace comprising: a furnace body having a body wall, a furnace lid, one or more first injection ports for injecting gaseous fuel into the furnace, one or more second injection ports for injecting oxidising agent into the furnace and one or more third injection ports for injecting mineral raw material into the furnace; wherein the furnace body comprises a top section, a central section and a bottom section; characterised in that the one or more first injection ports, the one or more second injection ports and the one or more third injection ports inject gaseous fuel, oxidising agent and mineral raw material, respectively, into the top section of the furnace, and in that each first injection port is spaced at an angular separation from the one or more second injection ports such that no first injection port is at an angular separation of less than 20 degrees from any of the second injection ports, measured about a vertical axis through the centre of the cyclone furnace.

The primary fuel of the invention is gaseous fuel. Gaseous fuel may be natural gas, biogas, shale gas or other available gas type, or a combination thereof. Preferably at least 60% of the energy in the method is derived from gaseous fuel, more preferably at least 80% of the energy. The sole fuel may be gaseous in the invention. This has the benefit of reducing or even eliminating particulate fuels such as coal, which improves the environmental profile of the method.

Additional burners, or electrodes for Joule heating, may be provided above or submerged within the melt pool. These burners or electrodes help to homogenise the mineral melt.

The oxidising agent may be air, oxygen, or oxygen-enriched air. Preferably oxygen-enriched air is used in the invention, which can be achieved by injecting oxygen into the air supply. Use of pure oxygen allows a smaller furnace volume but increases expense in this process, whereas air alone reduces expense but requires a larger furnace volume than oxygen-enriched air.

The mineral raw material is preferably particulate. Preferably the raw material particles have size in the millimetre scale. Preferably at least 99%, especially all, of the particles are smaller than 4 mm diameter and preferably 50% of particles by weight are smaller than 2 mm in diameter. The composition may be any glass, stone, or slag composition generally suitable for forming man-made vitreous fibres (MMVF). Preferably the composition of the fibres is in within the following parameters calculated as oxides in wt%:
SiO₂: at least 30, 32, 35 or 37; not more than 51, 48, 45 or 43
Al₂O₃: at least 14, 15, 16 or 18; not more than 35, 30, 26 or 23
CaO: at least 8 or 10; not more than 30, 25 or 20
MgO: at least 2 or 5; not more than 25, 20 or 15
FeO (including Fe₂O₃): at least 4 or 5; not more than 15, 12 or 10
FeO+MgO: at least 10, 12 or 15; not more than 30, 25 or 20
Na₂O+K₂O: zero or at least 1; not more than 10
CaO+Na₂O+K₂O: at least 10 or 15; not more than 30 or 25
TiO₂: zero or at least 1; not more than 6, 4 or 2
TiO₂+FeO: at least 4 or 6; not more than 18 or 12
B₂O₃: zero or at least 1; not more than 5 or 3
P₂O₅: zero or at least 1; not more than 8 or 5
Others: zero or at least 1; not more than 8 or 5

In the method the furnace may have a known construction for a cyclone furnace. In particular it may have a construction comprising a top section which is preferably substantially cylindrical, a central section which is preferably substantially frustoconical and a lower section which is preferably substantially cylindrical. A melt pool may be allowed to develop in the lower section, for collecting and fining the mineral melt.

Gaseous fuel, oxidising agent and mineral raw material are all injected in to the top of the furnace.

Preferably each second injection port is integrated with a third injection port so that the oxidising agent and mineral raw material are injected together. In this case the gaseous fuel is separated from both the oxidising agent and the mineral raw material as it is injected.

The gaseous fuel is preferably injected through the lid of the furnace.

In the top section of the furnace there is preferably no additional fuel injected.

Additional gaseous fuel may be injected into the bottom section of the furnace, usually just above the melt pool, via further injection ports. The proportion of the energy for the method that is generated from the fuel that is injected through the first injection ports near the top of the furnace is usually at least 40%, preferably from 45 to 55 %, in particular about 50%.

The mineral raw material and the oxidising agent are preferably injected through the side body wall of the furnace.

Each injection port for gaseous fuel is positioned at least 20 degrees away from any inlet for oxidising agent. This separation ensures that combustion and thereby heat release occurs sufficiently slowly. Angular separation is measured about a vertical axis through the centre of the furnace.

Injection of the gaseous fuel through the lid further facilitates separation of the gaseous fuel from the oxidising agent at the moment of injection into the furnace. This separation means that the gaseous fuel burns slower with controlled release of thermal energy such that the mineral raw material melts inside the furnace rather than sinters at the inlet which in turn could lead to blockage of the mineral material inlet. A further advantage to injecting the gaseous fuel through the lid rather than the side wall is that wear of the furnace interior walls is greatly reduced.

When the gaseous fuel is injected through the lid of the furnace, the gaseous fuel injector port may be at an angle of from 30° to 90° upwards from the lid. A lower angle is preferable for better mixing of the gaseous fuel with the mineral raw material and the oxidising agent, such that the gaseous fuel swirls through the air stream and burns in a controlled manner to melt the mineral raw material. A very low angle below 30° is not preferable because it requires a longer injection lance, especially when a thicker, water-cooled furnace lid is used.

The gaseous fuel and the gaseous oxidising agent may be provided in a stoichiometric or super-stoichiometric (surplus oxygen) ratio. A volume ratio of natural gas to oxygen-enriched air in the range 1:4 to 1:15, in particular 1:5 to 1:8 may be especially suited to the apparatus of the invention.

Gaseous fuel and oxidising agent may independently have injection speeds within the range 20 to 100 m/s, preferably 40 to 80 m/s. Particulate raw material may have an injection speed within the range 20 to 60 m/s, preferably 30 to 40 m/s.

### BRIEF DESCRIPTION OF DRAWINGS

Fig. 1 shows a schematic top view of a furnace in accordance with the invention.
Fig. 2 shows a schematic vertical cross section of the upper portion of a furnace in accordance with the invention.
Fig. 3 shows a schematic view of a furnace in accordance with the invention.

### DETAILED DESCRIPTION

An exemplary furnace in accordance with the invention is illustrated in the figures.

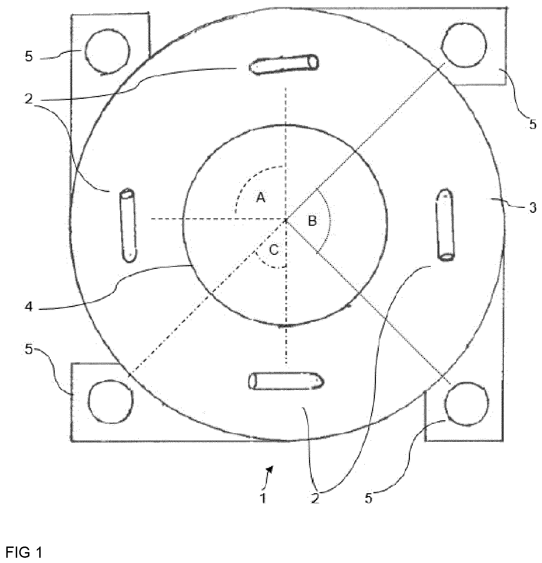

Figure 1 shows a schematic top view of a furnace 1. Gaseous fuel injection ports 2 traverse the lid 3 of the furnace, which comprises an exhaust outlet 4 in the centre. Mineral raw material and oxidising agent (such as air or oxygen-enriched air) are injected into the furnace together via injection ports 5 located at the top of the side body wall of the furnace 1. The top of the furnace 1 being generally cylindrical, there exists a single, continuous side body wall.

The gaseous fuel injection ports 2 are spaced apart at equal angular distance from one another. The angular separation between the gaseous fuel injection ports 2 is shown as angle A in Figure 1. In this case it is 90° because there are four such injection ports 2, equally spaced around the circumference of the furnace. The injection ports 5 for mineral raw material and oxidising agent are spaced at equal angular distance from one another. The angular separation between the injection ports 5 is shown as angle B in Figure 1. In this case it is 90° because there are four such ports 5, equally spaced around the circumference of the furnace. It will be seen that each injection port 5 is spaced apart at an angular distance of at least 20 degrees from the nearest gaseous fuel injection port 2. The angular separation between each injection port and the closest gaseous fuel injection port 2 is shown as angle C and in this embodiment is about 45°. The angular separation is measured about a point in the centre of this schematic top view.

The mineral raw material, oxidising agent and gaseous fuel are injected tangentially into the furnace 1 and move in a circulating flow, at or approaching a cyclone system. The location and angle of the gaseous fuel injection ports 2 means that the gaseous fuel is injected into the stream of oxidising agent and mineral raw material, facilitating slower mixing and energy release such that the mineral raw material melts with the combustion of the gaseous fuel.

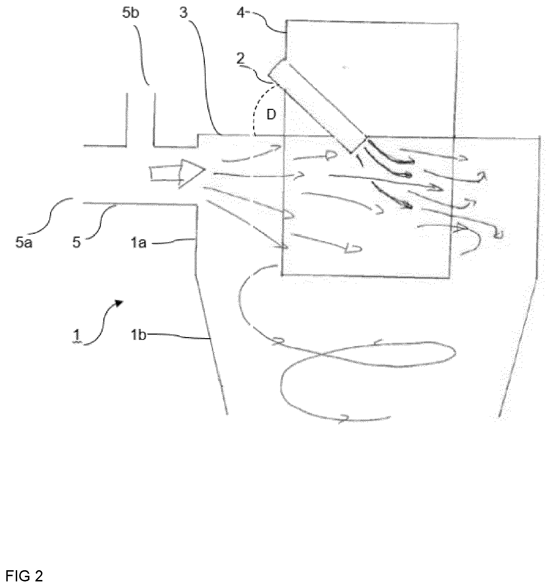

Figure 2 shows a cross-sectional side view of a furnace 1 in accordance with the invention. Mineral raw material and oxidising agent (usually air, oxygen, or oxygen-enriched air) are injected together through port 5. Specifically, in this embodiment the oxidising agent enters through inlet 5a and mineral raw material through inlet 5b, and the two components enter the top section 1a of the furnace 1 together. Alternatively (not shown) the raw material may be injected through the lid 3 at a position adjacent the inlet for the oxidising agent. If oxygen-enriched air is used as the oxidising agent, this may be achieved by injecting oxygen into the air stream at inlet 5a.

The general direction of the flow of materials inside the furnace 1 is also shown in figure 2. The oxidising agent and the mineral raw material provide a stream into which gaseous fuel is injected via port 2, which traverses the lid of the furnace. Each of the injection ports 2 is positioned at an angle D of from 30 to 90 degrees from the lid of the furnace. This allows for delayed mixing so that the energy release from the burning of the fuel can melt the mineral raw material, whilst allowing the fuel to combust without being drawn out of the exhaust 4 prior to combustion. The circulating flow continues as the mineral material melts and falls down the furnace to the central section 1b and on to the bottom section 1c (not shown in figure 2).

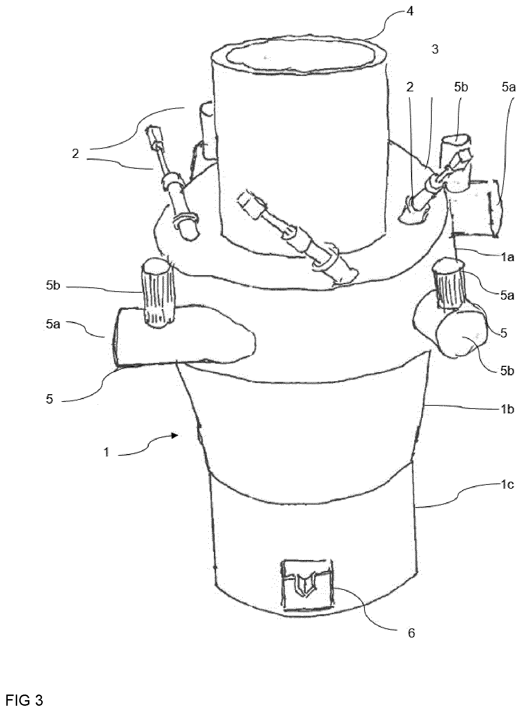

Figure 3 shows a schematic of the exterior of the furnace 1. The generally cylindrical top section 1a, the generally frustoconical central section 1b and the generally cylindrical bottom section 1c are shown. The ports 5 for mineral raw material and oxidising agent and the ports 2 for gaseous fuel are located at the top of the furnace 1. Specifically, the gaseous fuel ports 2 traverse the furnace lid 3 and the ports 5 for mineral raw material and oxidising agent traverse the side body wall of the top section 1a of the furnace 1.

Additional heating apparatus such as further burners or electrodes can be implemented in the central section 1b and/or in the bottom section 1c, to heat and refine the melted mineral material. However, the primary fuel source is gaseous fuel and the energy to melt the mineral material is provided by the gaseous fuel that is injected at or near the top of the furnace 1.

In the bottom section 1c, an outlet 6 is provided for the mineral melt. In figure 3, the outlet 6 takes the form of a siphon. The outlet 6 could alternatively be provided in the base of the furnace 1 (not shown).

The mineral melt may be transported to a fiberizing apparatus such as internal centrifugation (spinning cup) or external centrifugation (cascade spinner) apparatus. There the mineral melt is converted into fibres in conventional manner and can then be formed into mineral fibre products, also in conventional manner.

## Claims

1. Method of making mineral melt, the method comprising
providing a cyclone furnace, particulate mineral raw material, gaseous fuel, and oxidising agent,
injecting gaseous fuel into the furnace at one or more first injection ports
injecting oxidising agent into the furnace at one or more second injection ports
injecting mineral raw material into the furnace at one or more third injection ports,
wherein the gaseous fuel, oxidising agent and mineral raw material are all injected into the top of the furnace,
allowing the gaseous fuel to combust with the oxidising agent, thereby melting the mineral raw material
**characterised in that** each first injection port is spaced at an angular separation from the one or more second injection ports such that no first injection port is at an angular separation of less than 20 degrees from any of the second injection ports, measured about a vertical axis through the centre of the cyclone furnace.

2. Method according to claim 1 wherein each second injection port is integrated with a third injection port.

3. Method according to claim 1 wherein each first injection port is spaced at an angular separation from the one or more third injection ports such that no first injection port is at an angular separation of less than 20 degrees from any of the third injection ports, measured about a vertical axis through the centre of the cyclone furnace.

4. Method according to any preceding claim wherein the gaseous fuel injected through the one or more first injection ports provides at least 40% of the energy in the furnace, preferably at least 50%.

5. Method according to any preceding claim wherein the furnace comprises a body and a lid and wherein the first injection ports traverse the lid.

6. Method according to any preceding claim wherein the furnace comprises a body having a body wall and a lid, the body comprising a top section, a central section and a bottom section, wherein the second and third injection ports traverse the top section of the body wall.

7. Method according to claim 5 wherein each of the one or more first injection ports is positioned at an angle of from 30 to 90 degrees from the lid of the furnace.

8. Method according to any preceding claim wherein the mineral raw material has a composition in wt%
SiO₂: 30 to 51
Al₂O₃: at least 14, 15, 16 or 18; not more than 35, 30, 26 or 23
CaO: 8 to 30
MgO: 2 to 25
FeO (including Fe₂O₃): 4 to 15
FeO+MgO: 10 to 30
Na₂O+K₂O: up to 10
CaO+Na₂O+K₂O: 10 to 30
TiO₂: up to 6
TiO₂+FeO: 4 to 18
B₂O₃: up to 5
P₂O₅: up to 8
Others: up to 8.

9. Method according to any preceding claim wherein the oxidising agent is air, oxygen, or oxygen-enriched air, preferably oxygen-enriched air.

10. Cyclone furnace for melting mineral raw material, the furnace comprising
a furnace body, a furnace lid, one or more first injection ports for injecting gaseous fuel into the furnace, one or more second injection ports for injecting oxidising agent into the furnace and one or more third injection ports for injecting mineral raw material into the furnace,
wherein the furnace body comprises a top section, a central section and a bottom section,
**characterised in that** each first injection port is spaced at an angular separation from the one or more second injection ports such that no first injection port is at an angular separation of less than 20 degrees from any of the second injection ports, measured about a vertical axis through the centre of the cyclone furnace, and
**in that** each of the first, second and third injection ports are configured to inject the gaseous fuel, oxidising agent and mineral raw material, respectively, into the top of the furnace.

11. Cyclone furnace according to claim 10 wherein each second injection port is integrated with a third injection port.

12. Cyclone furnace according to claim 10 or claim 11 wherein each first injection port is spaced at an angular separation from the one or more third injection ports such that no first injection port is at an angular separation of less than 20 degrees from any of the third injection ports, measured about a vertical axis through the centre of the cyclone furnace.

13. Cyclone furnace according to any one of claims 10 to 12 wherein the furnace comprises a body wall and a lid and wherein the first injection ports traverse the lid.

14. Cyclone furnace according to claim 13 wherein each of the one or more first injection ports is positioned at an angle of from 30 to 90 degrees from the lid of the furnace.

15. Cyclone furnace according to any one of claims 10 to 14 wherein the furnace comprises a body wall and a lid, the body wall comprising a top section, a central section and a bottom section, wherein the second and third injection ports traverse the top section of the body wall.

## Patentansprüche

1. Verfahren zur Herstellung einer Mineralschmelze, umfassend:
Bereitstellen eines Zyklonofens, partikelförmigen mineralischen Rohstoffs, gasförmigen Brennstoffs und Oxidationsmittel,
Einspritzen von gasförmigem Brennstoff in den Ofen über eine oder mehrere erste Einspritzöffnungen;
Einspritzen von Oxidationsmittel in den Ofen über eine oder mehrere zweite Einspritzöffnungen;
Einspritzen von mineralischem Rohmaterial in den Ofen über eine oder mehrere dritte Einspritzöffnungen,
wobei der gasförmige Brennstoff, das Oxidationsmittel und der mineralische Rohstoff alle in die Oberseite des Ofens eingespritzt werden,
Ermöglichen, dass der gasförmige Brennstoff mit dem Oxidationsmittel verbrennt, wodurch der mineralische Rohstoff schmilzt,
**dadurch gekennzeichnet, dass** jede erste Einspritzöffnung in einem Winkelabstand zur einen oder mehreren zweiten Einspritzöffnungen angeordnet ist, sodass keine erste Einspritzöffnung einen Winkelabstand von weniger als 20 Grad zu einer der zweiten Einspritzöffnungen aufweist, gemessen um eine vertikale Achse durch die Mitte des Zyklonofens.

2. Verfahren nach Anspruch 1, wobei jede zweite Einspritzöffnung mit einer dritten Einspritzöffnung integriert ist.

3. Verfahren nach Anspruch 1, wobei jede erste Einspritzöffnung in einem Winkelabstand zu einer oder mehreren dritten Einspritzöffnungen angeordnet ist, sodass keine erste Einspritzöffnung einen Winkelabstand von weniger als 20 Grad zu irgendeiner der dritten Einspritzöffnungen aufweist, gemessen um eine vertikale Achse durch die Mitte des Zyklonofens.

4. Verfahren nach einem vorhergehenden Anspruch, wobei der durch die eine oder mehrere erste Einspritzöffnungen eingespritzte, gasförmige Brennstoff mindestens 40 %, vorzugsweise mindestens 50 %, der Energie im Ofen liefert.

5. Verfahren nach einem vorhergehenden Anspruch, wobei der Ofen einen Körper und einen Deckel umfasst und wobei die ersten Einspritzöffnungen den Deckel durchqueren.

6. Verfahren nach einem vorhergehenden Anspruch, wobei der Ofen einen Körper mit einer Körperwand und einem Deckel umfasst, wobei der Körper einen oberen Abschnitt, einen Mittelabschnitt und einen unteren Abschnitt umfasst, wobei die zweite und dritte Einspritzöffnung den oberen Abschnitt der Körperwand durchqueren.

7. Verfahren nach Anspruch 5, wobei jede der einen oder mehreren ersten Einspritzöffnungen in einem Winkel von 30 bis 90 Grad zum Deckel des Ofens angeordnet ist.

8. Verfahren nach einem vorhergehenden Anspruch, wobei der mineralische Rohstoff eine Zusammensetzung in Gew.-% aufweist
SiO₂: 30 bis 51
Al₂O₃: mindestens 14, 15, 16 oder 18; nicht mehr als 35, 30, 26 oder 23
CaO: 8 bis 30
MgO: 2 bis 25
FeO (einschließlich Fe₂O₃): 4 bis 15
FeO+MgO: 10 bis 30
Na₂O+K2O: bis zu 10
CaO+Na₂O+K₂O: 10 bis 30
TiO₂: bis zu 6
TiO₂+FeO: 4 bis 18
B₂O₃: bis zu 5
P₂O₅: bis zu 8
Andere: bis zu 8.

9. Verfahren nach einem vorhergehenden Anspruch, wobei das Oxidationsmittel Luft, Sauerstoff oder sauerstoffangereicherte Luft, vorzugsweise sauerstoffangereicherte Luft, ist.

10. Zyklonofen zum Schmelzen mineralischer Rohstoffe, wobei der Ofen Folgendes umfasst:
Einen Ofenkörper, einen Ofendeckel, eine oder mehrere erste Einspritzöffnungen zum Einspritzen von gasförmigem Brennstoff in den Ofen, eine oder mehrere zweite Einspritzöffnungen zum Einspritzen von Oxidationsmittel in den Ofen und eine oder mehrere dritte Einspritzöffnungen zum Einspritzen von mineralischem Rohmaterial in den Ofen,
wobei der Ofenkörper einen oberen Abschnitt, einen Mittelabschnitt und einen unteren Abschnitt umfasst,
**dadurch gekennzeichnet, dass** jede erste Einspritzöffnung in einem Winkelabstand zu der oder den zweiten Einspritzöffnungen angeordnet ist, sodass keine erste Einspritzöffnung einen Winkelabstand von weniger als 20 Grad zu irgendeinem der zweiten Einspritzöffnungen aufweist, gemessen um eine vertikale Achse durch die Mitte des Zyklonofens, und
dadurch, dass die ersten, zweiten und dritten Einspritzöffnungen so konfiguriert sind, dass sie den gasförmigen Brennstoff, das Oxidationsmittel bzw. den mineralischen Rohstoff in die Oberseite des Ofens einspritzen.

11. Zyklonofen nach Anspruch 10, wobei jede zweite Einspritzöffnung mit einer dritten Einspritzöffnung integriert ist.

12. Zyklonofen nach Anspruch 10 oder Anspruch 11, wobei jede erste Einspritzöffnung in einem Winkelabstand zur einen oder zu mehreren dritten Einspritzöffnungen angeordnet ist, sodass keine erste Einspritzöffnung einen Winkelabstand von weniger als 20 Grad zu irgendeinem der dritten Einspritzöffnungen aufweist, gemessen um eine vertikale Achse durch die Mitte des Zyklonofens.

13. Zyklonofen nach einem der Ansprüche 10 bis 12, wobei der Ofen eine Körperwand und einen Deckel umfasst und die ersten Einspritzöffnungen den Deckel durchqueren.

14. Zyklonofen nach Anspruch 13, wobei jede der einen oder mehreren ersten Einspritzöffnungen in einem Winkel von 30 bis 90 Grad zum Deckel des Ofens positioniert ist.

15. Zyklonofen nach einem der Ansprüche 10 bis 14, wobei der Ofen eine Körperwand und einen Deckel umfasst, wobei die Körperwand einen oberen Abschnitt, einen Mittelabschnitt und einen unteren Abschnitt umfasst, wobei die zweiten und dritten Einspritzöffnungen den oberen Abschnitt der Gehäusewand durchqueren.

## Revendications

1. Procédé de fabrication d'une masse fondue minérale, le procédé consistant à
fournir un four à cyclone, une matière première minérale particulaire, un combustible gazeux et un agent oxydant,
injecter un combustible gazeux dans le four à un ou plusieurs premiers orifices d'injection
injecter un agent oxydant dans le four à un ou plusieurs deuxièmes orifices d'injection
injecter une matière première minérale dans le four à un ou plusieurs troisièmes orifices d'injection,
dans lequel le combustible gazeux, un agent oxydant et une matière première minérale sont tous injectés dans la partie supérieure du four,
ce qui permet au combustible gazeux de brûler avec l'agent oxydant, ce qui fait fondre la matière première minérale
**caractérisé en ce que** chaque premier orifice d'injection est écarté d'une séparation angulaire du ou des deuxièmes orifices d'injection de telle sorte qu'aucun premier orifice d'injection n'est à une séparation angulaire de moins de 20 degrés d'un quelconque des deuxièmes orifices d'injection, mesuré autour d'un axe vertical à travers le centre du four à cyclone.

2. Procédé selon la revendication 1, dans lequel chaque deuxième orifice d'injection est intégré avec un troisième orifice d'injection.

3. Procédé selon la revendication 1, dans lequel chaque premier orifice d'injection est écarté d'une séparation angulaire du ou des troisièmes orifices d'injection de telle sorte qu'aucun premier orifice d'injection n'est à une séparation angulaire de moins de 20 degrés d'un quelconque des troisièmes orifices d'injection, mesuré autour d'un axe vertical à travers le centre du four à cyclone.

4. Procédé selon l'une quelconque des revendications précédentes, dans lequel le combustible gazeux injecté à travers le ou les premiers orifices d'injection fournit au moins 40 % de l'énergie dans le four, de préférence au moins 50 %.

5. Procédé selon l'une quelconque des revendications précédentes, dans lequel le four comprend un corps et un capot et dans lequel les premiers orifices d'injection traversent le capot.

6. Procédé selon l'une quelconque des revendications précédentes, dans lequel le four comprend un corps ayant une paroi de corps et un capot, le corps comprenant une section supérieure, une section centrale et une section inférieure, dans lequel les deuxièmes et troisièmes orifices d'injection traversent la section supérieure de la paroi de corps.

7. Procédé selon la revendication 5, dans lequel le ou les premiers orifices d'injection sont chacun positionnés à un angle de 30 à 90 degrés du capot du four.

8. Procédé selon l'une quelconque des revendications précédentes, dans lequel la matière première minérale a une composition en % en poids
SiO₂ : 30 à 51
Al₂O₃ : au moins 14, 15, 16 ou 18; pas plus de 35, 30, 26 ou 23
CaO : 8 à 30
MgO : 2 à 25
FeO (incluant Fe₂O₃) : 4 à 15
FeO+MgO : 10 à 30
Na₂O +K₂O : jusqu'à 10
CaO+Na₂O+K₂O : 10 à 30
TiO₂ : jusqu'à 6
TiO₂+FeO : 4 à 18
B₂O₃ : jusqu'à 5
P₂O₅ : jusqu'à 8
Autres : jusqu'à 8.

9. Procédé selon l'une quelconque des revendications précédentes, dans lequel l'agent oxydant est de l'air, de l'oxygène ou de l'air enrichi d'oxygène, de préférence de l'air enrichi d'oxygène.

10. Four à cyclone pour faire fondre une matière première minérale, le four comprenant un corps de four, un capot de four, un ou plusieurs premiers orifices d'injection pour injecter un combustible gazeux dans le four, un ou plusieurs deuxièmes orifices d'injection pour injecter un agent oxydant dans le four et un ou plusieurs troisièmes orifices d'injection pour injecter une matière première minérale dans le four,
dans lequel le corps de four comprend une section supérieure, une section centrale et une section inférieure,
**caractérisé en ce que** chaque premier orifice d'injection est écarté d'une séparation angulaire du ou des deuxièmes orifices d'injection de telle sorte qu'aucun premier orifice d'injection n'est à une séparation angulaire de moins de 20 degrés d'un quelconque des deuxièmes orifices d'injection, mesuré autour d'un axe vertical à travers le centre du four à cyclone, et
**en ce que** les premier, deuxième et troisièmes orifices d'injection sont chacun configurés pour injecter le combustible gazeux, l'agent oxydant et une matière première minérale, respectivement, dans la partie supérieure du four.

11. Four à cyclone selon la revendication 10, dans lequel chaque deuxième orifice d'injection est intégré avec un troisième orifice d'injection.

12. Four à cyclone selon la revendication 10 ou la revendication 11, dans lequel chaque premier orifice d'injection est écarté d'une séparation angulaire du ou des troisièmes orifices d'injection de telle sorte qu'aucun premier orifice d'injection n'est à une séparation angulaire de moins de 20 degrés d'un quelconque des troisièmes orifices d'injection, mesuré autour d'un axe vertical à travers le centre du four à cyclone.

13. Four à cyclone selon l'une quelconque des revendications 10 à 12, dans lequel le four comprend une paroi de corps et un capot et, dans lequel les premiers orifices d'injection traversent le capot.

14. Four à cyclone selon la revendication 13, dans lequel le ou les premiers orifices d'injection sont chacun positionnés à un angle de 30 à 90 degrés du capot du four.

15. Four à cyclone selon l'une quelconque des revendications 10 à 14, dans lequel le four comprend une paroi de corps et un capot, la paroi de corps comprenant une section supérieure, une section centrale et une section inférieure, dans lequel les deuxièmes et troisièmes orifices d'injection traversent la section supérieure de la paroi de corps.
